(19) Europäisches Patentamt / European Patent Office / Office européen des brevets

(11) EP 2 506 473 A1

(12) **EUROPEAN PATENT APPLICATION**
published in accordance with Art. 153(4) EPC

(43) Date of publication:
**03.10.2012 Bulletin 2012/40**

(21) Application number: **10837059.4**

(22) Date of filing: **20.12.2010**

(51) Int Cl.:
***H04J 11/00*** *(2006.01)* ***H04L 1/06*** *(2006.01)*
***H04B 7/04*** *(2006.01)*

(86) International application number:
**PCT/CN2010/079978**

(87) International publication number:
**WO 2011/072622 (23.06.2011 Gazette 2011/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.12.2009 CN 200910261629**

(71) Applicant: **Huawei Technologies Co., Ltd.**
**Shenzhen, Guangdong 518129 (CN)**

(72) Inventors:
- **LI, Bin**
  **Shenzhen**
  **Guangdong 518129 (CN)**
- **SHEN, Hui**
  **Shenzhen**
  **Guangdong 518129 (CN)**
- **LUO, Yi**
  **Shenzhen**
  **Guangdong 518129 (CN)**
- **LIU, Feng**
  **Shenzhen**
  **Guangdong 518129 (CN)**
- **XIA, Xianggen**
  **Shenzhen**
  **Guangdong 518129 (CN)**

(74) Representative: **Thun, Clemens**
**Mitscherlich & Partner**
**Sonnenstraße 33**
**80331 München (DE)**

# (54) METHOD FOR NETWORK CODING IN COOPERATIVE COMMUNICATION AND DEVICE THEREOF

(57) Embodiments of the present invention provide a network coding method and device in cooperative communication. The method, application and device relate to the field of wireless network communications. The method includes: receiving a signal sent from a first source node by using an OFDM symbol, and receiving a signal sent from a second source node by using an OFDM symbol; and performing a time reversal on one part of received mixed signals, and performing a reversal of a complex conjugate operation on the other part of the received mixed signals. The method, application and device have the advantage of obtaining a full diversity gain.

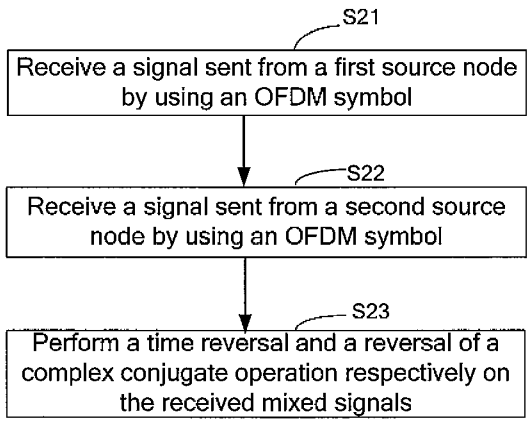


FIG. 2

EP 2 506 473 A1

## Description

This application claims priority to Chinese Patent Application No. 200910261629.0, filed with the Chinese Patent Office on December 18, 2009 and entitled "NETWORK CODING METHOD AND DEVICE IN COOPERATIVE COMMUNICATION", which is incorporated herein by reference in its entirety.

## FIELD OF THE INVENTION

The present invention relates to the field of wireless communications, and in particular to a network coding method and device in cooperative communication.

## BACKGROUND OF THE INVENTION

A network coding theory is an important breakthrough in the field of network communication research in recent years, and is first proposed by Rudolf Ahlswede, Li Shuoyan, Yang Weihao, and Cai Ning in 2000. The network coding theory includes: a network node qualified for coding processes (codes) the received information in a certain manner, and then transmits the information to a next-level network node; if the next-level node that receives the message is qualified for the coding, the node processes and transmits the received information in the same manner, and such a process is repeated till all processed information is converged to a destination node; and finally, at the destination node, original information sent from a source node can be decoded through an inverse process operation (decoding).
An original intention proposed by the network coding is to enable multicast transmission to achieve a maximum transmission capacity in theory, so as to obtain a network throughput better than that in routing multicast. However, with the development of the research, advantages in other aspects of the network coding are also embodied, such as balancing the network load and improving the bandwidth utilization. If the network coding is combined with other technologies or applications, performance related to the technologies or the application systems can be improved. Cooperative communication is taken as an example in the following for description.
The cooperative communication (cooperative communication) is a technology that is capable of effectively resisting fading of a wireless medium, and it can use a source signal and a relay signal to perform joint detection, so as to obtain a considerable space diversity gain.
Through research, it is found that the combination of network coding and cooperative communication in a wireless communication network may further improve the network performance. FIG. 1 illustrates an analog network coding scheme of combining network coding and cooperative communication in the prior art. Router is used as a relay node to exchange information between two source nodes Alice and Bob; in a first time slot (Time slot), the relay node (Router) receives data information sent respectively from Alice and Bob, and in a second time slot, the relay node fuses the data information received from Alice and Bob and then sends the converged data information out. In this way, the relay node (Router) is used to complete information exchange between the two source nodes in two time slots, which improves the network throughput.
In the implementation of the present invention, the inventors find that the prior art has the following problems.
Since the technical solution, that is, the network coding scheme provided in the prior art can be merely completed in a single-antenna relay node, and if more than two single-antenna relay nodes or a relay node with multiple antennas exists, the adoption of the above network coding cannot obtain a full diversity to improve transmission reliability of the system.

## SUMMARY OF THE INVENTION

Embodiments of the present invention provide a network coding method and device in cooperative communication. Through the method and device, a full diversity gain can be obtained.
A specific embodiment of the present invention provides a network coding method in cooperative communication, where the method includes:

> receiving a signal sent from a first source node by using an OFDM symbol, and receiving a signal sent from a second source node by using an OFDM symbol; and
> performing a time reversal and a reversal of a complex conjugate operation respectively on received mixed signals, where the mixed signals include the signal sent from the first source node and the signal sent from the second source node.

The performing a time reversal and a reversal of a complex conjugate operation respectively on the mixed signals includes:

when the number of antennas in a relay node set is an even number, performing the time reversal on one half of the mixed signals and then sending the signals, and performing the reversal of a complex conjugate operation on the other half of the mixed signals and then sending the signals, where the number of antennas for sending the signals after the time reversal is the same as the number of antennas for sending the signals after the reversal of a complex conjugate operation; and

when the number of the antennas in the relay node set is an odd number A greater than 1, performing the time reversal on (A-1)/2 mixed signals, and performing the reversal of a complex conjugate operation on [(A-1)/2]+1 mixed signals, where a difference of the number of the antennas for sending the signals after the reversal of a complex conjugate operation and the number of the antennas for sending the signals after the time reversal is 1.

The present invention further provides a signal processing method in cooperative communication, where the method includes:

receiving a processing signal sent from a relay node set, and removing a signal of a current source node in the processing signal to obtain a signal of another source node.

The processing signal is obtained after performing a time reversal and a reversal of a complex conjugate operation respectively on received mixed signals, and the mixed signals include the signal sent from the first source node and the signal sent from the second source node.

The processing signal is a signal after performing the time reversal and the reversal of a complex conjugate operation respectively on the received mixed signals, and the mixed signals include the signal sent from the first source node and the signal sent from the second source node.

The performing a time reversal and a reversal of a complex conjugate operation respectively on the mixed signals includes:

when the number of antennas in a relay node set is an even number, performing the time reversal on one half of the mixed signals and then sending the signals, and performing the reversal of a complex conjugate operation on the other half of the mixed signals and then sending the signals, where the number of antennas for sending the signals after the time reversal is the same as the number of antennas for sending the signals,after the reversal of a complex conjugate operation; and

when the number of the antennas in the relay node set is an odd number A greater than 1, performing the time reversal on (A-1)/2 mixed signals, and performing the reversal of a complex conjugate operation on [(A-1)/2]+1 mixed signals, where a difference of the number of the antennas for sending the signals after the reversal of a complex conjugate operation and the number of the antennas for sending the signals after the time reversal is 1.

The present invention further provides a network coding device in cooperative communication, where the device includes: a relay node set; and the relay node set includes:

a receiving unit, configured to receive a signal sent from a first source node by using an OFDM symbol, and receive a signal sent from a second source node by using an OFDM symbol; and

a coding unit, configured to perform a time reversal and a reversal of a complex conjugate operation respectively on mixed signals that are received by the receiving unit, where the mixed signals include the signal sent from the first source node and the signal sent from the second source node.

The performing a time reversal and a reversal of a complex conjugate operation respectively on the mixed signals includes:

when the number of antennas in a relay node set is an even number, performing the time reversal on one half of the mixed signals and then sending the signals, and performing the reversal of a complex conjugate operation on the other half of the mixed signals and then sending the signals, where the number of antennas for sending the signals after the time reversal is the same as the number of antennas for sending the signals after the reversal of a complex conjugate operation; and

when the number of the antennas in the relay node set is an odd number A greater than 1, performing the time reversal on (A-1)/2 mixed signals, and performing the reversal of a complex conjugate operation on [(A-1)/2]+1 mixed signals, where a difference of the number of the antennas for sending the signals after the reversal of a complex conjugate operation and the number of the antennas for sending the signals after the time reversal is 1.

The present invention further provides a signal processing device in cooperative communication, where the

device includes:

a receiving unit, configured to receive a processing signal sent from a relay node set; and
a removing unit, configured to remove a signal of a current source node in the processing signal to obtain a signal of another source node.

The processing signal is obtained after performing a time reversal and a reversal of a complex conjugate operation respectively on received mixed signals, and the mixed signals include a signal sent from a first source node and a signal sent from a second source node.
The processing signal is a signal after performing the time reversal and the reversal of a complex conjugate operation respectively on the received mixed signals.
The performing a time reversal and a reversal of a complex conjugate operation respectively on the mixed signals includes:

when the number of antennas in a relay node set is an even number, performing the time reversal on one half of the mixed signals and then sending the signals, and performing the reversal of a complex conjugate operation on the other half of the mixed signals and then sending the signals, where the number of antennas for sending the signals after the time reversal is the same as the number of antennas for sending the signals after the reversal of a complex conjugate operation; and
when the number of the antennas in the relay node set is an odd number A greater than 1, performing the time reversal on (A-1)/2 mixed signals, and performing the reversal of a complex conjugate operation on [(A-1)/2]+1 mixed signals, where a difference of the number of the antennas for sending the signals after the reversal of a complex conjugate operation and the number of the antennas for sending the signals after the time reversal is 1.

It can be seen from the provided technical solutions that, through the technical solutions of the embodiments of the present invention, a full diversity gain can be obtained.

## BRIEF DESCRIPTION OF THE DRAWINGS

FIG. 1 is a scheme diagram of analog network coding of a method for combining network coding and cooperative communication in the prior art;
FIG. 2 is a flow chart of a network coding method in cooperative communication according to a specific embodiment of the present invention;
FIG. 3 is a diagram of a cooperative communication system according to the present invention;
FIG. 4 is a simulation result diagram of two source nodes and two single-antenna relays according to the present invention;
FIG. 5 is a simulation result diagram of two source nodes and four single-antenna relays according to the present invention;
FIG. 6 is a simulation result diagram of two source nodes and three single-antenna relays according to the present invention;
FIG. 7 is a structural diagram of a network coding device in cooperative communication according to the present invention; and
FIG. 8 is a structural diagram of a signal processing device in cooperative communication according to the present invention.

## DETAILED DESCRIPTION OF THE EMBODIMENTS

For ease of description, unless specifically stated below, S1 indicates a source node 1; S2 indicates a source node 2; and R or relay indicates a relay node.
A specific embodiment of the present invention provides a network coding method in cooperative communication. The method is as shown in FIG. 2 and is completed in a cooperative communication system as shown in FIG. 3, where 1, 2, and M indicate serial numbers of antennas in a relay node set. If M is 4, the relay node set may include four single-antenna relay nodes. Definitely, in actual conditions, the relay node set may also be one relay node with 4 antennas or two relay nodes with two antennas.
S21: Receive a signal sent from a first source node by using an OFDM symbol.
S22: Receive a signal sent from a second source node by using an OFDM symbol.
S21 and S22 are preformed in an indefinite time sequence.
S23: Perform a time reversal and a reversal of a complex conjugate operation respectively on the received

mixed signals.

The mixed signals are signals received by the relay node set in a time slot, and specifically include the signal of S1 and the signal of S2. It should be noted that, the mixed signals here are merely received signals, and no fusion processing (for example, operations such as deleting or removing) is performed on the signal of S1 and the signal of S2. The mixed signals in the following all refer to the signal of S 1 and the signal of S2.

A specific manner of implementing S23 may be as follows.

When the number of the antennas in the relay node set is an even number, the time reversal is performed on one half of the mixed signals and then the signals are sent, and the reversal of a complex conjugate operation is performed on the other half of the mixed signals and then the signals are sent, where the number of the antennas for sending the signals after the time reversal is the same as the number of the antennas for sending the signals after the reversal of a complex conjugate operation.

When the number of the antennas in the relay node set is an odd number N greater than 1, the time reversal is performed on (A-1)/2 mixed signals, and the reversal of a complex conjugate operation is performed on [(A-1)/2]+1 mixed signals, where a difference of the number of the antennas for sending the signals after the reversal of a complex conjugate operation and the number of the antennas for sending the signals after the time reversal is 1.

S21, S22 and S23 may be all completed by the relay node set.

When the OFDM symbol includes a CP, S 13 may be: performing the time reversal and the reversal of a complex conjugate operation respectively on the OFDM symbol from which the CP is removed.

Optionally, after S23 is completed, the method may further include: sending the mixed signals on which the reversal of a complex conjugate operation and the time reversal are completed, where power of sending the signals after the time reversal is the same as power of sending the signals after the reversal of a complex conjugate operation. When the signals are sent by using the above power, and a signal-to-noise ratio is within a certain range, multiple receiving ends, that is, the source nodes (generally two source nodes) may all obtain a full order of diversity M.

In the method provided by the specific embodiment of the present invention, a time reversal and a reversal of a complex conjugate operation are respectively performed on the received OFDM symbols, so as to obtain a full order of diversity M, thereby improving transmission reliability.

The technical effect is described in the following through specific calculation.

The obtained mixed signals may be as follows:

$$y_{j1} = \sqrt{P_1}\left(FFT\left(X_1^1\right)\otimes h_{S1Rj} + FFT\left(X_1^2\right)\otimes h_{S2Rj}\otimes \Gamma_{2j}\right) + n_{j1}$$
$$y_{j2} = \sqrt{P_1}\left(FFT\left(X_2^1\right)\otimes h_{S1Rj} + FFT\left(X_2^2\right)\otimes h_{S2Rj}\otimes \Gamma_{2j}\right) + n_{j2}$$

$$X_1^1 = \left[X_{1,0}^1, X_{1,1}^1, \cdots, X_{1,N-1}^1\right]^T X_2^1 = \left[X_{2,0}^1, X_{2,1}^1, \cdots, X_{2,N-1}^1\right]^T$$
$$X_1^2 = \left[X_{1,0}^2, X_{1,1}^2, \cdots, X_{1,N-1}^2\right]^T X_2^2 = \left[X_{2,0}^2, X_{2,1}^2, \cdots, X_{2,N-1}^2\right]^T$$

where, $\otimes$ indicates a circular convolution; $n_{j1}$ and $n_{j2}$ indicate additive white Gaussian noises; $y_{j1}$ indicates a first OFDM symbol on a jth relay node; $y_{j2}$ indicates a second OFDM symbol on the jth relay node; $X_1^1$ indicates a signal sent from the source node 1 on the first OFDM symbol; $X_{1,N-1}^1$ indicates a signal of S1 on a (N-1)$^{th}$ sub-carrier of the first OFDM symbol; $X_1^2$ indicates a signal sent from the source node 2 on the first OFDM symbol; $X_{1,N-1}^2$ indicates a signal of S2 on the (N-1)$^{th}$ sub-carrier of the first OFDM symbol; $h_{S1Rj}$ indicates a channel coefficient from the j$^{th}$ relay node to the source node 1; and $\Gamma_{2j}$ indicates a delay difference of time taken to send the signal from the second source node to the j$^{th}$ relay node and time taken to send the signal from other source node to the j$^{th}$ relay node, and FFT is Fourier transform.

The performing a time reversal and a reversal of a complex conjugate operation respectively on the mixed signals (for example, the number of the antennas in the relay node set is two, that is, M in the cooperative communication system as shown in FIG. 3 is 2, that is, two single-antenna relay nodes or definitely one relay node with 2 antennas exists; for ease of description, the first antenna in the relay node set is referred to as antenna 1, and the second antenna is referred to as antenna 2) is specifically as shown in Table 1:

**Table 1:**

TABLE I

| ANC AT THE RELAY NODES (M=2) | | |
|---|---|---|
| | $R_1$ | $R_2$ |
| OFDM 1 | $\zeta(y_{11})$ | $-y_{22}^*$ |
| OFDM 2 | $\zeta(y_{12})$ | $-y_{22}^*$ |

where, y11 indicates a signal received by the antenna 1 on the first OFDM symbol; y12 indicates a signal received by the antenna 1 on the second OFDM symbol; y21 indicates a signal received by the antenna 2 on the first OFDM symbol; and y22 indicates a signal received by the antenna 2 on the second OFDM symbol.

**[0049]** * indicates a complex conjugate operation; and $\xi(\bullet)$ indicates a time reversal on the signals. The time reversal on the signals may be specifically as follows:

$$\xi(y(n)) \underline{\underline{\Delta}} y(N-n), n = 0,1,\cdots,N-1 \quad and \ y(N) \underline{\underline{\Delta}} y(0)$$

After analog network coding is performed on the mixed signals, the signals may be as follows:

$$\xi(y_{11}) = \sqrt{P_1}\left(\xi\left(FFT\left(X_1^1\right)\otimes h_{S1R1}\right) + \xi\left(FFT\left(X_1^2\right)\otimes h_{S2R1}\otimes \Gamma_{21}\right)\right) + \xi(n_{11})$$
$$\xi(y_{12}) = \sqrt{P_1}\left(\xi\left(FFT\left(X_2^1\right)\otimes h_{S1R1}\right) + \xi\left(FFT\left(X_2^2\right)\otimes h_{S2R1}\otimes \Gamma_{21}\right)\right) + \xi(n_{12})$$

$$y_{21}^* = \sqrt{P_1}\left(\left(FFT\left(X_1^2\right)\right)^* \otimes h_{S1R2}^*\right) + \left(\left(FFT\left(X_1^2\right)\right)^* \otimes h_{S2R2}^* \otimes \Gamma_{22}\right) + n_{21}^*$$
$$-y_{22}^* = -\sqrt{P_1}\left(\left(FFT\left(X_2^1\right)\right)^* \otimes h_{S1R2}^*\right) + \left(\left(FFT\left(X_2^2\right)\right)^* \otimes h_{S2R2}^* \otimes \Gamma_{22}\right) + n_{22}^*$$

Taking the source node 1 (S1) as an example, the received mixed signals with the CP removed are as follows:

$$Z_1^1 = \sqrt{\frac{P_2}{2P_1+1}}\left(\xi(y_{11})\otimes h_{R1S1} - y_{22}^* \otimes h_{R2S1} \otimes \Gamma'_{2,1}\right) + w_1^1$$

$$Z_2^1 = \sqrt{\frac{P_2}{2P_1+1}}\left(\xi(y_{12})\otimes h_{R1S1} - y_{21}^* \otimes h_{R2S1} \otimes \Gamma'_{2,1}\right) + w_2^1$$

where, $\Gamma'_{2,1} = \left[0_{T'_{2,1}}, 1, 0, \cdots, 0\right]^T$, $0_{T'_{2,1}}$ indicates a full zero vector of ; $w_1^1$ and $w_2^1$ indicate additive white Gaussian noises of S1; $Z_1^1$ indicates a frequency domain signal of the source node 1 on the first OFDM symbol; $Z_2^1$ indicates a frequency domain signal of the source node 2 on the first OFDM symbol; P1 indicates emission power of the source node 1 and emission power of the source node 2 is also P1; P2 is emission power of an antenna (that is, a single-antenna relay node); $h_{S2R2}$ indicates a channel coefficient from the second relay node to the source node 2; $h_{S2R1}$ indicates a channel coefficient from the second relay node to the source node 1; and $h_{R2S1}$ indicates a channel coefficient

from the first relay node to the source node 2.

After the FFT operation is performed on a signal received by S1, in order to obtain a signal sent from the source node 2 (S2), S1 has to first remove the information sent from S1, that is, has to remove parts related to $\mathrm{X}_1^1$ and $\mathrm{X}_2^1$.

It is assumed that the operation is performed on a TDD system, and channel coefficients in two time slots maintain constant, so S1 may be informed of $h_{S_1R_j}$ from $h_{R_jS_1}$.

In the case that S1 is in time of two continuous OFDM symbols, an expression of a frequency domain is as follows:

$$Z_1^1=\sqrt{\frac{P_2}{2P_1+1}}FFT\left(\xi\left(\sqrt{P_1}\left(X_1^2\right)\otimes h_{S2R1}\otimes\Gamma_{2,1}\right)\right)+\xi\left(n_{11}\right)\otimes h_{R1S1}$$
$$+\left(-\sqrt{P_1}\left(\left(FFT\left(X_2^2\right)\right)^*\otimes h_{S2R2}{}^*\otimes\Gamma_{2,2}\right)-n_{22}{}^*\right)\otimes h_{R2S1}\otimes\Gamma'_{2,2}\right)+FFT\left(W_1^1\right)$$

$$Z_2^1=\sqrt{\frac{P_2}{2P_1+1}}FFT\left(\left(\sqrt{P_1}\left(\xi\left(FFT\left(X_2^2\right)\otimes h_{S2R1}\otimes\Gamma_{2,1}\right)\right)+\xi\left(n_{12}\right)\otimes h_{R1S1}\right.\right.$$
$$+\left(\sqrt{P_1}\left(\left(FFT\left(X_1^2\right)\right)^*\otimes h_{S2R2}{}^*\otimes\Gamma_{2,2}\right)-n_{21}{}^*\right)\otimes h_{R2S1}\otimes\Gamma'_{2,2}\right)+FFT\left(W_2^1\right)$$

The above expression is simplified through the following properties:

1)For an $N\times 1$ point vectorX, (FFT(X))* = IFFT(X*);
2)For an $N\times 1$ point vectorX, FFT($\xi$(FFT(X))) = IFFT(FFT(X)) = X;
3)For two $N\times 1$ point vectors X and $h$,$\xi(X\otimes h)=\xi(X)\otimes\xi(h)$;
4)For an $N\times 1$ point vector h, FFT($\xi$($h$)) = $\xi$(FFT($h$)).

Then, the following expression may be obtained:

$$Z_1^1=\sqrt{\frac{P_1P_2}{2P_1+1}}\left(\mathrm{X}_1^2\circ H_{S_2R_1}\circ H_{R_1S_1}\circ\xi\left(\mathrm{FFT}\left(\Gamma_{2,1}\right)\right)-\mathrm{X}_2^{2*}\circ H_{S_2R_2}\circ H_{R_2S_1}\circ\mathrm{FFT}\left(\Gamma_{2,2}\right)\circ\mathrm{FFT}\left(\Gamma'_{2,1}\right)\right)$$
$$+\sqrt{\frac{P_2}{2P_1+1}}\left(\mathrm{N}_{11}\circ H_{R_1S_1}-\mathrm{N}_{22}\circ H_{R_2S_1}\circ\mathrm{FFT}\left(\Gamma'_{2,1}\right)\right)+\mathrm{W}_1^1,$$

$$Z_2^1=\sqrt{\frac{P_1P_2}{2P_1+1}}\left(\mathrm{X}_2^2\circ H_{S_2R_1}\circ H_{R_1S_1}\circ\xi\left(\mathrm{FFT}\left(\Gamma_{2,1}\right)\right)+\mathrm{X}_1^{2*}\circ H_{S_2R_2}\circ H_{R_2S_1}\circ\mathrm{FFT}\left(\Gamma_{2,2}\right)\circ\mathrm{FFT}\left(\Gamma'_{2,1}\right)\right)$$
$$+\sqrt{\frac{P_2}{2P_1+1}}\left(\mathrm{N}_{12}\circ H_{R_1S_1}+\mathrm{N}_{21}\circ H_{R_2S_1}\circ\mathrm{FFT}\left(\Gamma'_{2,1}\right)\right)+\mathrm{W}_2^1$$

where, ° indicates a Hadamard product, that is, an element-wise product; $H_{R2S1}$ indicates a signal after performing FFT on $h_{R2S1}$, and $H_{R1S1}$ indicates a signal after performing FFT on $h_{R1S1}$.

Since the length of the CP is sufficient, orthogonality is still maintained in the frequency domain in spite of a timing error. A delay T in a time domain corresponding to a phase shift $f^T$ in the frequency domain is as follows:

$$\mathrm{f}^T=\left[1,e^{-j2\pi T/N},\cdots,e^{-j2\pi T(N-1)/N}\right]^T$$

$$\mathrm{f}=\left[1,e^{-j2\pi/N},\cdots,e^{-j2\pi(N-1)/N}\right]^T$$

where, $\xi(f^T)=f^{T*}$.

For S1, the received signal is as follows:

$$Z_1^1=\sqrt{\frac{P_1P_2}{2P_1+1}}\left(X_1^2\circ H_{S_2R_1}\circ H_{R_1S_1}\circ f^{T2,1*}-X_2^{2*}\circ H_{S_2R_2}\circ H_{R_2S_1}\circ f^{T2,2+T'2,1}\right)+\sqrt{\frac{P_2}{2P_1+1}}\left(N_{11}\circ H_{R_1S_1}-N_{22}\circ H_{R_2S_1}\circ f^{T'2,1}\right)+W_1^1,$$

$$Z_2^1=\sqrt{\frac{P_1P_2}{2P_1+1}}\left(X_2^2\circ H_{S_2R_1}\circ H_{R_1S_1}\circ f^{T2,1*}+X_1^{2*}\circ H_{S_2R_2}\circ H_{R_2S_1}\circ f^{T2,2+T'2,1}\right)+\sqrt{\frac{P_2}{2P_1+1}}\left(N_{12}\circ H_{R_1S_1}+N_{21}\circ H_{R_2S_1}\circ f^{T'2,1}\right)+W_2^1.$$

The signal may also be expressed as follows:

$$Z_1^1=\left[Z_{1,0}^1,Z_{1,1}^1,\cdots,Z_{1,N-1}^1\right]^T \text{ and } Z_2^1=\left[Z_{2,0}^1,Z_{2,1}^1,\cdots,Z_{2,N-1}^1\right]^T.$$

For each sub-carrier k($0\le\kappa\le N-1$):

$$\begin{bmatrix}Z_{1,k}^1\\Z_{2,k}^1\end{bmatrix}=\sqrt{\frac{P_1P_2}{2P_1+1}}\begin{bmatrix}X_{1,k}^2 & -X_{2,k}^{2*}\\X_{2,k}^2 & X_{1,k}^{2*}\end{bmatrix}\begin{bmatrix}H_{S_2R_1,k}H_{R_1S_1,k}f_k^{T2,1*}\\H_{S_2R_2,k}H_{R_2S_1,k}f_k^{T2,2+T'2,1}\end{bmatrix}+\sqrt{\frac{P_2}{2P_1+1}}\begin{bmatrix}N_{11,k}H_{R_1s_1,k}-N_{22,k}H_{R_2S_1,k}f_k^{T'2,1}\\N_{12,k}H_{R_1S_1,k}+N_{21,k}H_{R_2S_1,k}f_k^{T'2,1}\end{bmatrix}+\begin{bmatrix}W_{1,k}^1\\W_{2,k}^1\end{bmatrix}$$

where, $H_{R_jS_i,k}$ indicates a kth element of $H_{R_JS_i}$ and $H_{R_jS_i}$ is data after performing FFT on $h_{R_jS_i}$; * indicates a complex conjugate operation, and $f_k^T=\exp(-j2\pi kT/N)$; $N_{j1,k}$ and $N_{j2,k}$ respectively indicate the kth elements of $N_{j1}$ and $N_{j2}$, and $N_{j1}$ and $N_{j2}$ are respectively data after performing an FFT operation on $n_{j1}$ and $n_{j2}$; $W_{1,k}^1$ and $W_{2,k}^1$ respectively indicate the kth elements of $W_1^1$ and $W_2^1$, and $W_2^1$ indicate additive white Gaussian noises of S1.

It can be seen from the above process that, a form similar to an Alamouti code is constructed on each sub-carrier of S1, and in this way, fast symbol-wise maximum likelihood decoding of the Alamouti code may be applied. Due to symmetry, likewise, a form similar to the Alamouti code may also be obtained on each sub-carrier of S2.

A simulation result of the two source nodes and two single-antenna relays provided by the method is as shown in FIG. 3. It can be seen from FIG. 4 that, through the method provided by the present invention, the source node 1 and the source node 2 may both obtain a full diversity gain, thereby improving transmission reliability.

The present invention further provides a signal processing method in cooperative communication, where the method includes:

receiving a processing signal sent from a relay node set, and removing a signal of a current source node in the processing signal to obtain a signal of another source node.

where, the processing signal is obtained after performing a time reversal and a reversal of a complex conjugate operation respectively on the mixed signals.

The performing a time reversal and a reversal of a complex conjugate operation respectively on the mixed signals includes:

when the number of the antennas in a relay node set is an even number, performing the time reversal on one half of the mixed signals and then sending the signals, and performing the reversal of a complex conjugate operation on the other half of the mixed signals and then sending the signals, where the number of the antennas for sending the signals after the time reversal is the same as the number of the antennas for sending the signals after the reversal of a complex conjugate operation; and

when the number of the antennas in the relay node set is an odd number A greater than 1, performing the time reversal on (A-1)/2 mixed signals, and performing the reversal of a complex conjugate operation on [(A-1)/2]+1 mixed signals, where a difference of the number of the antennas for sending the signals after the reversal of a complex conjugate operation and the number of the antennas for sending the signals after the time reversal is 1.

The above method may be completed by the source node.

In the method provided by the specific embodiment of the present invention, a time reversal and a reversal of a complex conjugate operation are respectively performed on the received processing signal, so as to obtain a full order of diversity M, thereby improving transmission reliability.

The present invention provides an embodiment, and this embodiment provides a network coding method in cooperative communication. A technical scenario provided by this embodiment is as follows: this embodiment is completed in a system as shown in FIG. 3, where a value of M is 4, that is, the embodiment is completed between four single-antenna relay nodes and two source nodes; definitely, the relay node in actual conditions may also be a relay node with four antennas or two relay nodes with two antennas. For ease of description, four single-antenna relay nodes are taken as an example. Here, the four antennas in the relay node set, that is, the four relay nodes, are referred to as R1, R2, R3 and R4, and the two source nodes are referred to as S1 and S2. S1 and S2 may have the following properties in a constructed OSTBC:

$$G_{4\times4}=\sqrt{2}\begin{bmatrix} X_1 & -X_2^* & 0 & 0 \\ X_2 & X_1^* & 0 & 0 \\ 0 & 0 & X_1 & -X_2^* \\ 0 & 0 & X_2 & X_1^* \end{bmatrix}$$

Different from the above method, this method uses a specific manner of performing a time reversal and a reversal of a complex conjugate operation respectively on the mixed signals, which is as shown in Table 2:

**Table 2:**

TABLE II

| ANC AT THE RELAY NODES(M=4) | | | | |
|---|---|---|---|---|
| | $R_1$ | $R_2$ | $R_3$ | $R_4$ |
| OFDM 1 | $\zeta(y_{11})$ | $-y_{22}^*$ | | |
| OFDM 2 | $\zeta(y_{12})$ | $y_{21}^*$ | | |
| OFDM 3 | | | $\zeta(y_{31})$ | $-y_{42}^*$ |
| OFDM 4 | | | $\zeta(y_{32})$ | $y_{41}^*$ |

where, y11 indicates a signal received by the antenna 1 on the first OFDM symbol; y12 indicates a signal received by the antenna 1 on the second OFDM symbol; y21 indicates a signal received by the antenna 2 on the first OFDM symbol; y22 indicates a signal received by the antenna 2 on the second OFDM symbol; y31 indicates a signal received by the

antenna 3 on the third OFDM symbol; y32 indicates a signal received by the antenna 3 on the fourth OFDM symbol; y41 indicates a signal received by the antenna 4 on the fourth OFDM symbol; and y42 indicates a signal received by the antenna 4 on the third OFDM symbol.

A simulation result of two source nodes and four single-antenna relays by using the network coding method provided by an embodiment is as shown in FIG. 5. It can be seen from FIG. 5 that, the source node 1 and the source node 2 can both obtain a full diversity gain M, thereby improving transmission reliability.

The present invention provides another embodiment, and this embodiment provides a signal transmission method of a relay node. A technical scenario provided by this embodiment is as follows: this embodiment is completed in a system as shown in FIG. 3, where a value of M is 3, that is, the embodiment is completed between three single-antenna relay nodes and two source nodes; definitely, the relay node in actual conditions may be a relay node with three antennas, or one single-antenna relay node and one relay node with two antennas. For ease of description, three single-antenna relay nodes are taken as an example. Here, three antennas in the relay node set, that is, three relay nodes are referred to as R1, R2 and R3, and the two source nodes are referred to as S1 and S2. Different from S1 and S2 in the first embodiment, S1 and S2 in this embodiment may have the following properties in the constructed OSTBC:

$$G_{4\times 3} = \sqrt{2}\begin{bmatrix} X_1 & -X_2^* & 0 \\ X_2 & X_1^* & 0 \\ 0 & 0 & -X_1^* \\ 0 & 0 & X_2^* \end{bmatrix}$$

A specific manner of performing a time reversal and a reversal of a complex conjugate operation respectively on the mixed signals is as shown in Table 3:

**Table 3:**

TABLE III

| ANC AT THE RELAY NODES(M=3) | | | |
|---|---|---|---|
| | $R_1$ | $R_2$ | $R_3$ |
| OFDM 1 | $\zeta(y_{11})$ | $-y_{22}^*$ | |
| OFDM 2 | $\zeta(y_{12})$ | $y_{21}^*$ | |
| OFDM 3 | | | $-y_{31}^*$ |
| OFDM 4 | | | $y_{32}^*$ |

where, y11 indicates a signal received by the antenna 1 on the first OFDM symbol; y12 indicates a signal received by the antenna 1 on the second OFDM symbol; y21 indicates a signal received by the antenna 2 on the first OFDM symbol; y22 indicates a signal received by the antenna 2 on the second OFDM symbol; y31 indicates a signal received by the antenna 3 on the third OFDM symbol; and y32 indicates a signal received by the antenna 3 on the fourth OFDM symbol.

A simulation result of two source nodes and three single-antenna relays by using a network coding method provided by another embodiment is as shown in FIG. 6. It can be seen from FIG. 6 that, the source node 1 and the source node 2 can both obtain a full diversity gain, thereby improving system transmission reliability.

The present invention provides still another embodiment, and this embodiment provides a signal transmission method of a relay node. This embodiment is completed in a system as shown in FIG. 3, where a value of M is 4, that is, the embodiment is completed between four single-antenna relay nodes and two source nodes; definitely, the relay node in actual conditions may be a relay node with four antennas, or two relay nodes with two antennas. For ease of description, four single-antenna relay nodes are taken as an example. Here, four antennas in the relay node set, that is, four relay nodes are referred to as R1, R2, R3 and R4, and the two source nodes are referred to as S1 and S2. Different from S1 and S2 in the first embodiment, S1 and S2 in this embodiment may have the following properties in the constructed

QOSTBC.

$$G'_{4\times4}=\begin{bmatrix} X_1 & -X_2^* & X_3 & -X_4^* \\ X_2 & X_1^* & X_4 & X_3^* \\ X_3 & -X_4^* & X_1 & -X_2^* \\ X_4 & X_3^* & X_2 & X_1^* \end{bmatrix}$$

A specific manner of performing a time reversal and a reversal of a complex conjugate operation respectively on the mixed signals is as shown in Table 4:

**Table 4:**

TABLE IV

| ANC AT THE RELAY NODES (M=4) | | | | |
|---|---|---|---|---|
| | $R_1$ | $R_2$ | $R_3$ | $R_4$ |
| OFDM 1 | $\zeta(y_{11})$ | $-y_{22}^*$ | $\zeta(y_{33})$ | $-y_{44}^*$ |
| OFDM 2 | $\zeta(y_{12})$ | $y_{21}^*$ | $\zeta(y_{34})$ | $y_{43}^*$ |
| OFDM 3 | $\zeta(y_{13})$ | $-y_{24}^*$ | $\zeta(y_{31})$ | $-y_{42}^*$ |
| OFDM 4 | $\zeta(y_{14})$ | $y_{23}^*$ | $\zeta(y_{32})$ | $y_{41}^*$ |

where, y11 indicates a signal received by the antenna 1 on the first OFDM symbol; y12 indicates a signal received by the antenna 1 on the second OFDM symbol; y13 indicates a signal received by the antenna 1 on the third OFDM symbol; y14 indicates a signal received by the antenna 1 on the fourth OFDM symbol; y21 indicates a signal received by the antenna 2 on the first OFDM symbol; y22 indicates a signal received by the antenna 2 on the second OFDM symbol; y24 indicates a signal received by the antenna 2 on the third OFDM symbol; y23 indicates a signal received by the antenna 2 on the fourth OFDM symbol; y31 indicates a signal received by the antenna 3 on the third OFDM symbol; y32 indicates a signal received by the antenna 3 on the fourth OFDM symbol; y33 indicates a signal received by the antenna 3 on the first OFDM symbol; y34 indicates a signal received by the antenna 3 on the second OFDM symbol; y41 indicates a signal received by the antenna 4 on the fourth OFDM symbol; y42 indicates a signal received by the antenna 4 on the third OFDM symbol; y44 indicates a signal received by the antenna 4 on the first OFDM symbol; and y43 indicates a signal received by the antenna 4 on the second OFDM symbol.

The source node 1 and the source node 2 in still another embodiment of the present invention can both obtain a full diversity gain, thereby improving transmission reliability.

The present invention further provides an application of a network coding method, and the method is applied to a relay node set with at least two antennas.

The case of the relay node set with at least two antennas may be at least two single-antenna relay nodes, or a relay node with at least two antennas, or a combination of a single-antenna relay node and a relay node with multiple antennas (two or more than two).

The present invention further provides a network coding device in cooperative communication, where the device is as shown in FIG. 7, and includes:

a receiving unit 71, configured to receive a signal sent from a first source node by using an OFDM symbol, and receive a signal sent from a second source node by using an OFDM symbol; and

a coding unit 72, configured to perform a time reversal and a reversal of a complex conjugate operation respectively on the mixed signals that are received by the receiving unit 71.

For the performing a time reversal and a reversal of a complex conjugate operation respectively on the mixed signals, reference may be made to the relevant description in the method embodiments.

Optionally, the device further includes:

a sending unit 73, configured to send the mixed signals on which the time reversal and the reversal of a complex conjugate operation are completed; and

a control unit 74, configured to enable the sending unit 73 to maintain emission power of the signals after the time reversal the same as emission power of the signals after the reversal of a complex conjugate operation.

The network coding device may be specifically a relay node set, which may specifically include one or more relay nodes.

In the network coding device in cooperative communication provided by the present invention, the two source nodes can both obtain a full diversity gain, thereby improving transmission reliability.

The present invention further provides a signal processing device in cooperative communication, where the device is as shown in FIG. 8, and includes:

a receiving unit 81, configured to receive a processing signal sent from a relay node set; and

a removing unit 82, configured to remove a signal of a current source node in the processing signal to obtain a signal of another source node.

The processing signal is obtained after performing the time reversal and the reversal of a complex conjugate operation respectively on the received mixed signals.

The performing a time reversal and a reversal of a complex conjugate operation respectively on the mixed signals includes:

when the number of the antennas in a relay node set is an even number, performing the time reversal on one half of the mixed signals and then sending the signals, and performing the reversal of a complex conjugate operation on the other half of the mixed signals and then sending the signals, where the number of the antennas for sending the signals after the time reversal is the same as the number of the antennas for sending the signals after the reversal of a complex conjugate operation; and

when the number of the antennas in the relay node set is an odd number A greater than 1, performing the time reversal on (A-1)/2 mixed signals, and performing the reversal of a complex conjugate operation on [(A-1)/2]+1 mixed signals, where a difference of the number of the antennas for sending the signals after the reversal of a complex conjugate operation and the number of the antennas for sending the signals after the time reversal is 1.

In the signal processing device in cooperative communication provided by the present invention, the two source nodes can both obtain a full diversity gain, thereby improving transmission reliability.

It may be understood by persons skilled in the art that the accompanying drawings are merely schematic diagram of an exemplary embodiment, and modules or processes in the accompanying drawings are not necessarily required in implementing the present invention.

Those of ordinary skill in the art may understand that all or a part of the steps of the method according to the embodiments of the present invention may be implemented by a program instructing relevant hardware. The program may be stored in a computer readable storage medium. When the program is run, one or combination of the steps of the method according to the embodiments of the present invention is performed.

To sum up, the technical solutions provided by the embodiments of the present invention have the advantage of obtaining a full diversity gain, thereby improving transmission reliability.

The present invention is described in detail in the above. The principle and implementation of the present invention are described here through specific examples. The description about the embodiments of the present invention is merely provided for ease of understanding of the method and core ideas of the present invention. Meanwhile those of ordinary skill in the art may make variations and modifications to the specific implementations and application scopes according to the ideas of the present invention. Therefore, the specification shall not be construed as a limit to the present invention.

## Claims

**1.** A network coding method in cooperative communication, wherein the method comprises:

receiving a signal sent from a first source node by using an OFDM symbol, and receiving a signal sent from a second source node by using an OFDM symbol; and
performing a time reversal and a reversal of a complex conjugate operation respectively on received mixed signals, wherein the mixed signals comprise the signal sent from the first source node and the signal sent from the second source node;
the performing a time reversal and a reversal of a complex conjugate operation respectively on the mixed signals comprises:

when the number of antennas in a relay node set is an even number, performing the time reversal on one half of the mixed signals and then sending the signals, and performing the reversal of a complex conjugate operation on the other half of the mixed signals and then sending the signals, wherein the number of antennas for sending the signals after the time reversal is the same as the number of antennas for sending the signals after the reversal of a complex conjugate operation; and
when the number of the antennas in the relay node set is an odd number A greater than 1, performing the time reversal on (A-1)/2 mixed signals, and performing the reversal of a complex conjugate operation on [(A-1)/2]+1 mixed signals, wherein a difference of the number of the antennas for sending the signals after the reversal of a complex conjugate operation and the number of the antennas for sending the signals after the time reversal is 1.

2. The method according to claim 1, wherein when the number of the antennas in the relay node set is two, the performing a time reversal and a reversal of a complex conjugate operation respectively on the mixed signals is as shown in Table 1:

**Table 1:**

| | $R_1$ | $R_2$ |
|---|---|---|
| OFDM 1 | $\zeta(y_{11})$ | $-y_{22}^*$ |
| OFDM 2 | $\zeta(y_{12})$ | $y_{21}^*$ |

wherein, * indicates a complex conjugate operation; $\xi(\bullet)$ indicates a time reversal on a signal; $R_1$ indicates antenna 1 in the relay node set; $R_2$ indicates antenna 2 in the relay node set; y11 indicates a signal received by the antenna 1 on a first OFDM symbol; y12 indicates a signal received by the antenna 1 on a second OFDM symbol; y21 indicates a signal received by the antenna 2 on the first OFDM symbol; and y22 indicates a signal received by the antenna 2 on the second OFDM symbol.

3. The method according to claim 1, wherein when the number of the antennas in the relay node set is four, the performing a time reversal and a reversal of a complex conjugate operation respectively on the mixed signals is as shown in Table 2:

**Table 2:**

| | $R_1$ | $R_2$ | $R_3$ | $R_4$ |
|---|---|---|---|---|
| OFDM 1 | $\zeta(y_{11})$ | $-y_{22}^*$ | | |
| OFDM 2 | $\zeta(y_{12})$ | $y_{21}^*$ | | |
| OFDM 3 | | | $\zeta(y_{31})$ | $-y_{42}^*$ |
| OFDM 4 | | | $\zeta(y_{32})$ | $y_{41}^*$ |

wherein, * indicates a complex conjugate operation; $\xi(\bullet)$ indicates a time reversal on a signal; $R_1$ indicates antenna 1 in the relay node set; $R_2$ indicates antenna 2 in the relay node set; $R_3$ indicates antenna 3 of the relay node set; $R_4$ indicates antenna 4 in the relay node set; y11 indicates a signal received by the antenna 1 on a first OFDM symbol; y12 indicates a signal received by the antenna 1 on a second OFDM symbol; y21 indicates a signal received by the antenna 2 on the first OFDM symbol; y22 indicates a signal received by the antenna 2 on the second OFDM symbol; y31 indicates a signal received by the antenna 3 on a third OFDM symbol; y32 indicates a signal received

by the antenna 3 on a fourth OFDM symbol; y41 indicates a signal received by the antenna 4 on the fourth OFDM symbol; and y42 indicates a signal received by the antenna 4 on the third OFDM symbol.

4. The method according to claim 1, wherein when the number of the antennas in the relay node set is three, the performing a time reversal and a reversal of a complex conjugate operation respectively on the mixed signals is as shown in Table 3:

**Table 3:**

| | $R_1$ | $R_2$ | $R_3$ |
|---|---|---|---|
| OFDM 1 | $\zeta(y_{11})$ | $-y_{22}^*$ | |
| OFDM 2 | $\zeta(y_{12})$ | $y_{21}^*$ | |
| OFDM 3 | | | $-y_{31}^*$ |
| OFDM 4 | | | $y_{32}^*$ |

wherein, * indicates a complex conjugate operation; $\xi(\bullet)$ indicates a time reversal on a signal; $R_1$ indicates antenna 1 in the relay node set; $R_2$ indicates antenna 2 in the relay node set; $R_3$ indicates antenna 3 in the relay node set; y11 indicates a signal received by the antenna 1 on a first OFDM symbol; y12 indicates a signal received by the antenna 1 on a second OFDM symbol; y21 indicates a signal received by the antenna 2 on the first OFDM symbol; y22 indicates a signal received by the antenna 2 on the second OFDM symbol; y31 indicates a signal received by the antenna 3 on a third OFDM symbol; and y32 indicates a signal received by the antenna 3 on a fourth OFDM symbol.

5. The method according to claim 1, wherein when the number of the antennas in the relay node set is four, the performing a time reversal and a reversal of a complex conjugate operation respectively on the mixed signals is as shown in Table 4:

**Table 4:**

| | $R_1$ | $R_2$ | $R_3$ | $R_4$ |
|---|---|---|---|---|
| OFDM 1 | $\zeta(y_{11})$ | $-y_{22}^*$ | $\zeta(y_{33})$ | $-y_{44}^*$ |
| OFDM 2 | $\zeta(y_{12})$ | $y_{21}^*$ | $\zeta(y_{34})$ | $y_{43}^*$ |
| OFDM 3 | $\zeta(y_{13})$ | $-y_{24}^*$ | $\zeta(y_{31})$ | $-y_{42}^*$ |
| OFDM 4 | $\zeta(y_{14})$ | $y_{23}^*$ | $\zeta(y_{32})$ | $y_{41}^*$ |

wherein, * indicates a complex conjugate operation; $\xi(\bullet)$ indicates a time reversal on a signal; $R_1$ indicates antenna 1 in the relay node set; $R_2$ indicates antenna 2 in the relay node set; $R_3$ indicates antenna 3 in the relay node set; $R_4$ indicates antenna 4 in the relay node set; y11 indicates a signal received by the antenna 1 on a first OFDM symbol; y12 indicates a signal received by the antenna 1 on a second OFDM symbol; y13 indicates a signal received by the antenna 1 on a third OFDM symbol; y14 indicates a signal received by the antenna 1 on a fourth OFDM symbol; y21 indicates a signal received by the antenna 2 on the first OFDM symbol; y22 indicates a signal received by the antenna 2 on the second OFDM symbol; y24 indicates a signal received by the antenna 2 on the third OFDM symbol; y23 indicates a signal received by the antenna 2 on the fourth OFDM symbol; y31 indicates a signal received by the antenna 3 on the third OFDM symbol; y32 indicates a signal received by the antenna 3 on the fourth OFDM symbol; y33 indicates a signal received by the antenna 3 on the first OFDM symbol; y34 indicates a signal received by the antenna 3 on the second OFDM symbol; y41 indicates a signal received by the antenna 4 on the fourth OFDM symbol; y42 indicates a signal received by the antenna 4 on the third OFDM symbol; y44 indicates a signal received by the antenna 4 on the first OFDM symbol; and y43 indicates a signal received by the antenna 4 on the second OFDM symbol.

6. The method according to claim 1, wherein after the performing a time reversal and a reversal of a complex conjugate operation respectively on the mixed signals, the method further comprises: sending the mixed signals on which the

time reversal and the reversal of a complex conjugate operation are completed, wherein power of sending the signals after a time reversal is the same as power of sending the signals after a reversal of a complex conjugate operation.

**7.** A signal processing method in cooperative communication, wherein the method comprises:

receiving a processing signal sent from a relay node set, and removing a signal of a current source node in the processing signal to obtain a signal of another source node,
wherein, the processing signal is obtained after performing a time reversal and a reversal of a complex conjugate operation respectively on received mixed signals, and the mixed signals comprise a signal sent from a first source node and a signal sent from a second source node;
the performing a time reversal and a reversal of a complex conjugate operation respectively on the mixed signals comprises:

when the number of antennas in a relay node set is an even number, performing the time reversal on one half of the mixed signals and then sending the signals, and performing the reversal of a complex conjugate operation on the other half of the mixed signals and then sending the signals, wherein the number of antennas for sending the signals after the time reversal is the same as the number of antennas for sending the signals after the reversal of a complex conjugate operation; and
when the number of the antennas in the relay node set is an odd number A greater than 1, performing the time reversal on (A-1)/2 mixed signals, and performing the reversal of a complex conjugate operation on [(A-1)/2]+1 mixed signals, wherein a difference of the number of the antennas for sending the signals after the reversal of a complex conjugate operation and the number of the antennas for sending the signals after the time reversal is 1.

**8.** A network coding device in cooperative communication, wherein the device comprises: a relay node set, wherein the relay node set comprises:

a receiving unit, configured to receive a signal sent from a first source node by using an OFDM symbol, and receive a signal sent from a second source node by using an OFDM symbol; and
a coding unit, configured to perform a time reversal and a reversal of a complex conjugate operation respectively on mixed signals that are received by the receiving unit, wherein the mixed signals comprise the signal sent from the first source node and the signal sent from the second source node;
the performing a time reversal and a reversal of a complex conjugate operation respectively on the mixed signals comprises:

when the number of antennas of relay nodes in a relay node set is an even number, performing the time reversal on one half of the mixed signals and then sending the signals, and performing the reversal of a complex conjugate operation on the other half of the mixed signals and then sending the signals, wherein the number of antennas for sending the signals after the time reversal is the same as the number of antennas for sending the signals after the reversal of a complex conjugate operation; and
when the number of the antennas in the relay node set is an odd number A greater than 1, performing the time reversal on (A-1)/2 mixed signals, and performing the reversal of a complex conjugate operation on [(A-1)/2]+1 mixed signals, wherein a difference of the number of the antennas for sending the signals after the reversal of a complex conjugate operation and the number of the antennas for sending the signals after the time reversal is 1.

**9.** The device according to claim 8, wherein the relay node set further comprises:

a sending unit, configured to send the mixed signals on which the time reversal and the reversal of a complex conjugate operation are completed; and
a control unit, configured to enable the sending unit to maintain emission power of the signals after the time reversal the same as emission power of the signals after the reversal of a complex conjugate operation.

**10.** The device according to claim 8, wherein the relay node set comprises one or more relay nodes.

**11.** A signal processing device in cooperative communication, wherein the device comprises:

a receiving unit, configured to receive a processing signal sent from a relay node set; and

a removing unit, configured to remove a signal of a current source node in the processing signal to obtain a signal of another source node,
wherein, the processing signal is obtained after performing a time reversal and a reversal of a complex conjugate operation respectively on received mixed signals, and the mixed signals comprise a signal sent from a first source node and a signal sent from a second source node;
the performing a time reversal and a reversal of a complex conjugate operation respectively on the mixed signals comprises:

when the number of antennas in a relay node set is an even number, performing the time reversal on one half of the mixed signals and then sending the signals, and performing the reversal of a complex conjugate operation on the other half of the mixed signals and then sending the signals, wherein the number of antennas for sending the signals after the time reversal is the same as the number of antennas for sending the signals after the reversal of a complex conjugate operation; and
when the number of the antennas in the relay node set is an odd number A greater than 1, performing the time reversal on (A-1)/2 mixed signals, and performing the reversal of a complex conjugate operation on [(A-1)/2]+1 mixed signals, wherein a difference of the number of the antennas for sending the signals after the reversal of a complex conjugate operation and the number of the antennas for sending the signals after the time reversal is 1.

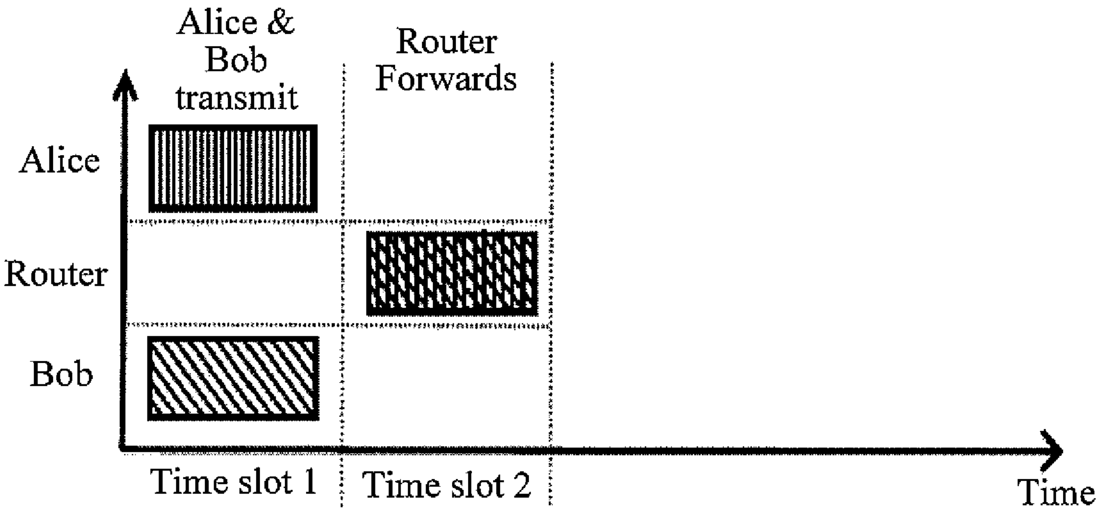

(d) Analog Network Coding

FIG. 1

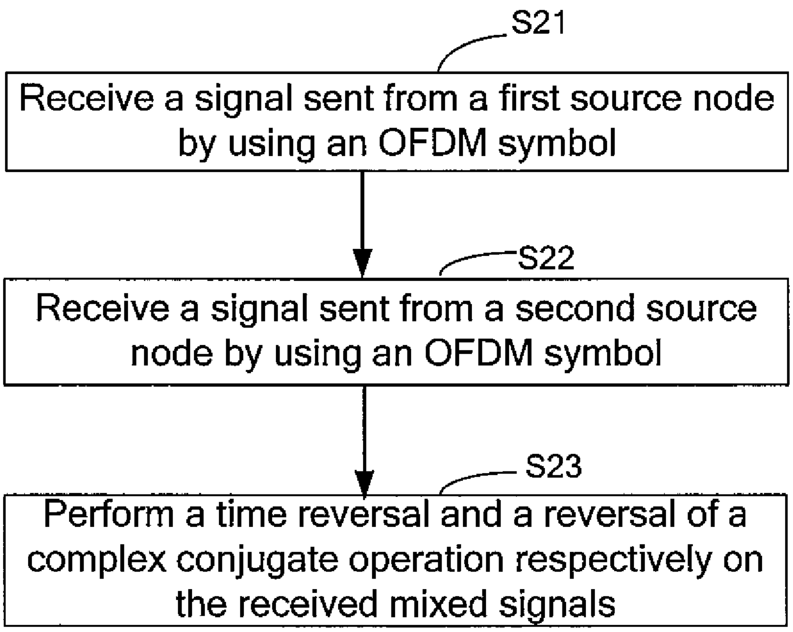


FIG. 2

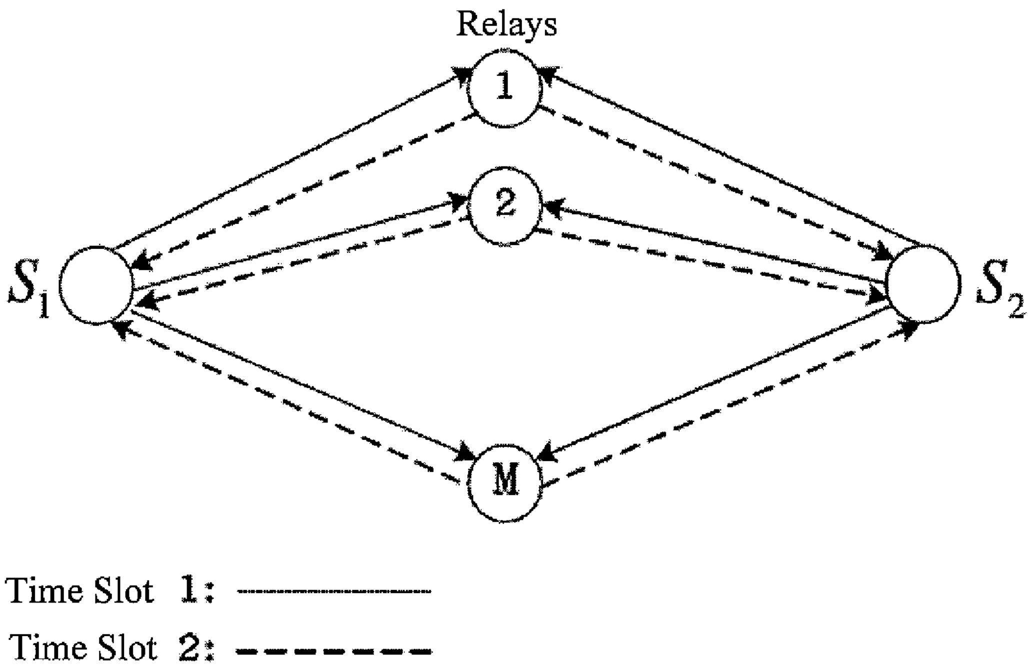


FIG. 3

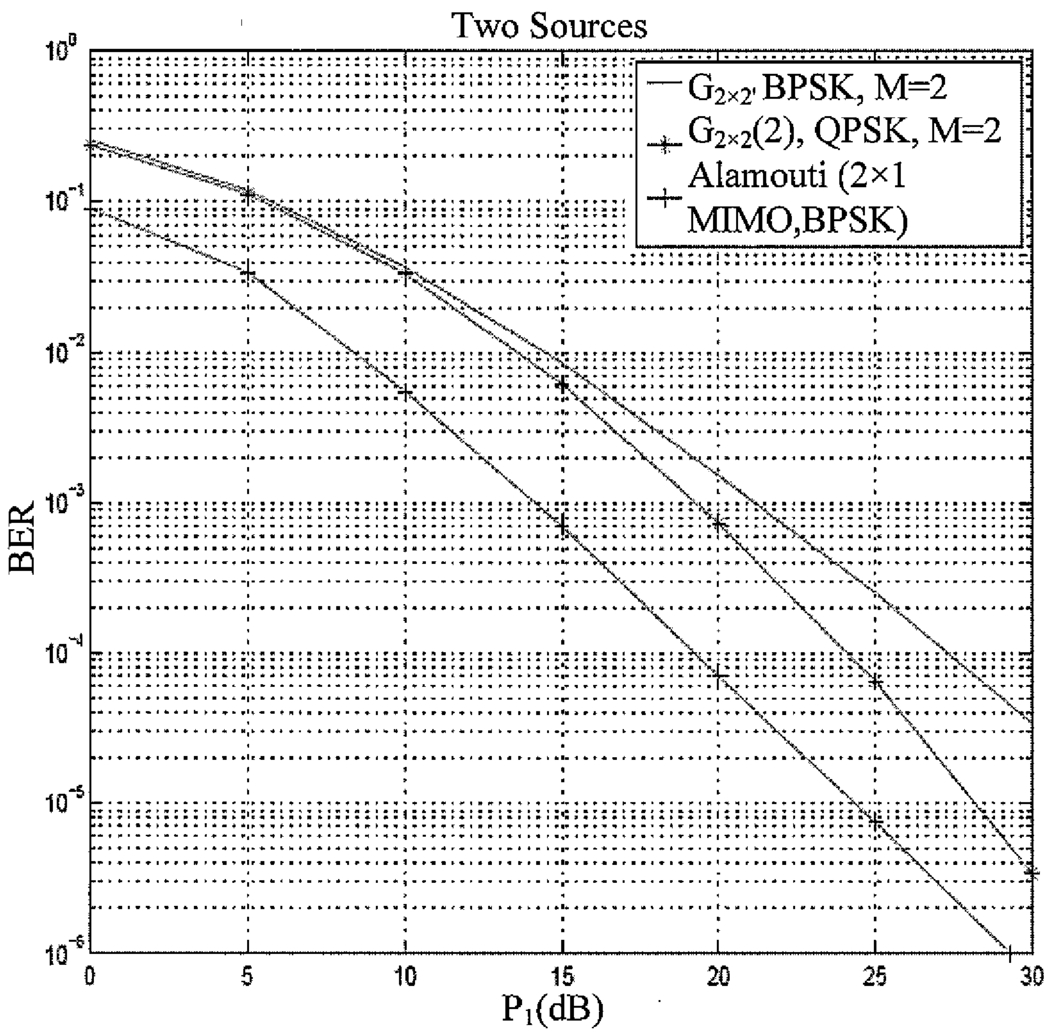
Two Sources
BER
P1(dB)
G2×2, BPSK, M=2
G2×2(2), QPSK, M=2
Alamouti (2×1 MIMO,BPSK)
10^0
10^-1
10^-2
10^-3
10^-4
10^-5
10^-6
0
5
10
15
20
25
30

FIG. 4

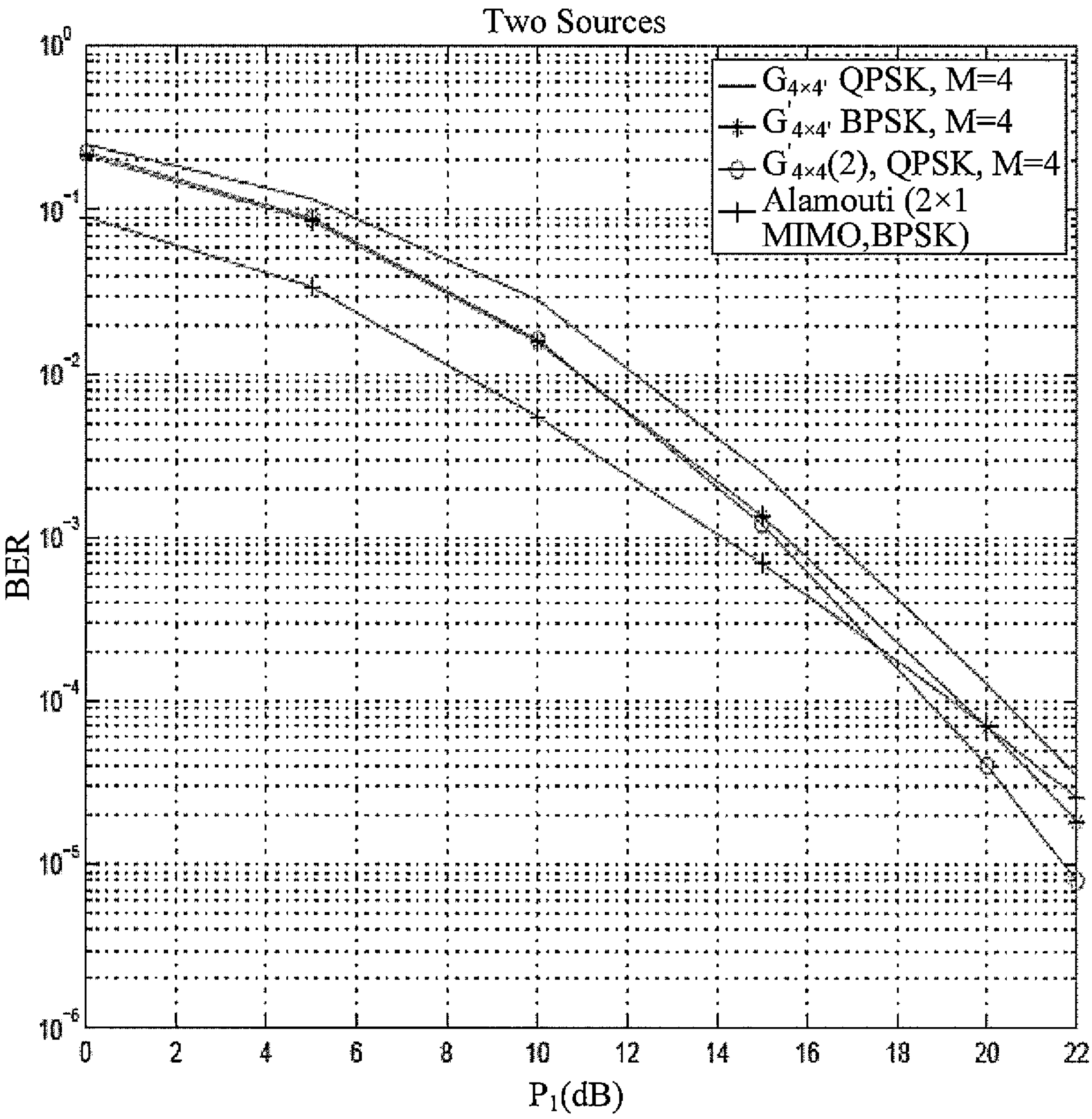
Two Sources
$G_{4\times4'}$ QPSK, M=4
$G'_{4\times4'}$ BPSK, M=4
$G'_{4\times4}(2)$, QPSK, M=4
Alamouti (2×1 MIMO,BPSK)
BER
$P_1$(dB)
$10^0$
$10^{-1}$
$10^{-2}$
$10^{-3}$
$10^{-4}$
$10^{-5}$
$10^{-6}$
0 2 4 6 8 10 12 14 16 18 20 22

FIG. 5

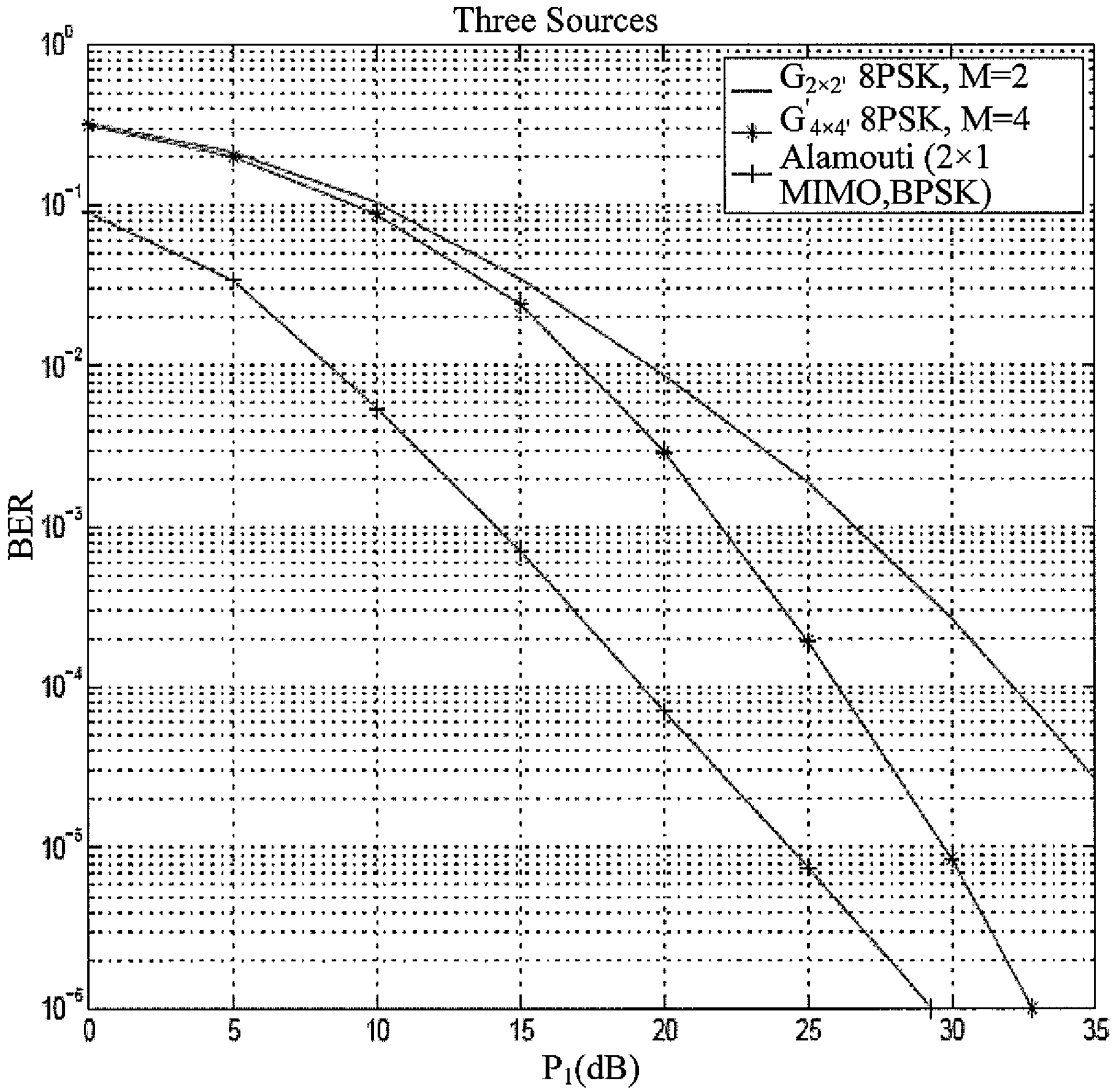
Three Sources
$10^0$
$10^{-1}$
$10^{-2}$
$10^{-3}$
$10^{-4}$
$10^{-5}$
$10^{-6}$
BER
0
5
10
15
20
25
30
35
$P_1$(dB)
$G_{2\times2'}$ 8PSK, M=2
$G'_{4\times4'}$ 8PSK, M=4
Alamouti (2×1 MIMO,BPSK)

FIG. 6

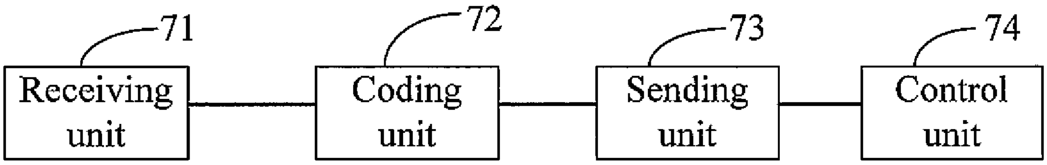
71
Receiving unit
72
Coding unit
73
Sending unit
74
Control unit

FIG. 7

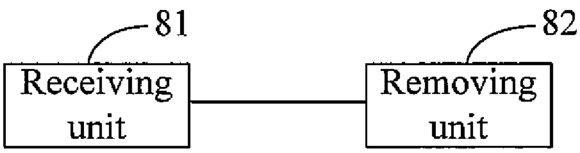
81
Receiving unit
82
Removing unit

FIG. 8

# INTERNATIONAL SEARCH REPORT

International application No.
PCT/CN2010/079978

**A. CLASSIFICATION OF SUBJECT MATTER**

See extra sheet

According to International Patent Classification (IPC) or to both national classification and IPC

B. FIELDS SEARCHED

Minimum documentation searched (classification system followed by classification symbols)

IPC: H04J 11/00; H04L; H04B 7/04; H04W

Documentation searched other than minimum documentation to the extent that such documents are included in the fields searched

Electronic data base consulted during the international search (name of data base and, where practicable, search terms used)

CPRSABS,CNTXT,CNKI,VEN,WOTXT,USTXT,EPTXT: OFDM, cooperative 2w communication, network 2w coding, cod+, invers+, revers+, conjugat+, time 2w revers+, two 2w way, relay

C. DOCUMENTS CONSIDERED TO BE RELEVANT

| Category* | Citation of document, with indication, where appropriate, of the relevant passages | Relevant to claim No. |
|---|---|---|
| PX | ZHENG Li et al. Achieving Full Diversity and Fast ML Decoding via Simple Analog Network Coding for Asynchronous Two-Way Relay Networks. IEEE Transactions on Communications. 31 Dec. 2009 (31.12.2009) Vol.57, NO.12, pages 3672-3681, ISSN:0090-6778 | 1-11 |
| A | CN101494513A ((UYXI-N) UNIV XIDIAN) 29 Jul. 2009 (29.07.2009) See the whole document | 1-11 |
| A | US6834043B1 ((MOTI) MOTOROLA INC) 21 Dec. 2004 (21.12.2004) See the whole document | 1-11 |
| A | SUSINDER RAJAN, G. et al. OFDM Based Distributed Space Time Coding for Asynchronous Relay Networks. communications, 2008.ICC'08.IEEE International Conference on. 23 May 2008 (23.05.2008) pages 1118-1122 | 1-11 |

☐ Further documents are listed in the continuation of Box C. ☒ See patent family annex.

* Special categories of cited documents:

"A" document defining the general state of the art which is not considered to be of particular relevance

"E" earlier application or patent but published on or after the international filing date

"L" document which may throw doubts on priority claim (S) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&"document member of the same patent family

| Date of the actual completion of the international search | Date of mailing of the international search report |
|---|---|
| 16 Mar. 2011 (16.03.2011) | **31 Mar. 2011 (31.03.2011)** |

Name and mailing address of the ISA/CN
The State Intellectual Property Office, the P.R.China
6 Xitucheng Rd., Jimen Bridge, Haidian District, Beijing, China
100088
Facsimile No. 86-10-62019451

Authorized officer
FAN, Wenjing
Telephone No. (86-10)62411255

Form PCT/ISA /210 (second sheet) (July 2009)

**INTERNATIONAL SEARCH REPORT**
Information on patent family members

International application No.
PCT/CN2010/079978

| Patent Documents referred in the Report | Publication Date | Patent Family | Publication Date |
|---|---|---|---|
| CN101494513A | 29.07.2009 | None | |
| US6834043B1 | 21.12.2004 | None | |

Form PCT/ISA /210 (patent family annex) (July 2009)

# INTERNATIONAL SEARCH REPORT

International application No.
PCT/CN2010/079978

Continuation of: Box A in second sheet

CLASSIFICATION OF SUBJECT MATTER

H04J11/00 (2006.01) i
H04L1/06 (2006.01) i
H04B7/04 (2006.01) i

Form PCT/ISA /210 (extra sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 200910261629